# FASCICULE DE BREVET EUROPEEN

(11) **EP 2 027 667 B1**
(45) Date de publication et mention de la délivrance du brevet: **04.12.2019**
(21) Numéro de dépôt: 07788889.9
(22) Date de dépôt: 13.06.2007
(51) Int. Cl.: H04L 9/32, H04N 7/167

(54) **PROCEDES DE DIFFUSION ET DE RECEPTION D'UN PROGRAMME MULTIMEDIA EMBROUILLE, TETE DE RESEAU, TERMINAL, RECEPTEUR ET PROCESSEUR DE SECURITE POUR CES PROCEDES**
VERFAHREN ZUM SENDEN UND EMPFANGEN EINES VERWÜRFELTEN MULTIMEDIAPROGRAMMS, NETZWERKKOPF, ENDGERÄT, EMPFÄNGER UND SICHERHEITSPROZESSOR FÜR DIESE VERFAHREN
METHODS FOR BROADCASTING AND RECEIVING A SCRAMBLED MULTIMEDIA PROGRAMME, NETWORK HEAD, TERMINAL, RECEIVER AND SECURITY PROCESSOR FOR THESE METHODS

(30) Priorité: 14.06.2006 FR 0605296
(43) Date de publication de la demande: 25.02.2009
(73) Titulaire: Viaccess, 92057 Paris La Défense Cedex (FR)
(72) Inventeur: CARLES, Philippe, 92190 Meudon (FR); CHEVALLIER, Anthony, 78210 Saint Cyr L'Ecole (FR); DUBROEUCQ, Gilles, 28130 Saint Piat (FR); LANFRANCHI, Stéphane, 75012 Paris (FR)
(74) Mandataire: Lavoix
(86) Numéro de dépôt international: PCT/FR2007/000984
(87) Numéro de publication internationale: WO 2007/144510

(56) Documents cités:
- EP-A- 0 969 667
- US-A- 5 029 207
- MENEZES, VANSTONE, OORSCHOT: "Handbook of Applied Cryptography" 1997, CRC PRESS LLC , USA , XP002435541 page 551 - page 553
- MENEZES ET AL: "Handbook of Applied Cryptography", USA, 1 January 1997 (1997-01-01), pages 490-553, XP055102215, USA

## Description

La présente invention concerne des procédés de diffusion et de réception d'un programme multimédia embrouillé, une tête de réseau, un terminal, un récepteur et un processeur de sécurité pour ces procédés.

Il existe des procédés de diffusion de programmes multimédias par l'intermédiaire de réseaux large bande dans lesquels :
- une information peut être acheminée vers une adresse multicast de sorte que seul un groupe de plusieurs terminaux correspondants à cette adresse multicast reçoit l'information tandis que d'autres terminaux connectés au même réseau ne reçoivent pas cette information, et
- une information peut être acheminée vers une adresse unicast de sorte que seul le terminal correspondant à cette adresse unicast reçoit l'information tandis que les autres terminaux connectés au même réseau ne la reçoivent pas.

Par exemple, un tel réseau est un réseau basé sur le protocole IP (Internet Protocol) tel que le réseau Internet également connu sous le terme de toile d'araignée mondiale.

Dans les procédés existants, une tête de réseau :
- embrouille le programme multimédia avec un mot de contrôle,
- chiffre le mot de contrôle afin d'obtenir un premier cryptogramme,
- chiffre le premier cryptogramme afin d'obtenir un second cryptogramme, le premier et le second chiffrements étant réalisés à l'aide de clés de chiffrement différentes choisies dans le groupe composé d'une clé d'exploitation et d'une clé de licence,
- multiplexe le second cryptogramme avec le programme multimédia embrouillé pour obtenir un contenu multiplexé,
- diffuse le contenu multiplexé vers une adresse multicast de diffusion afin d'établir une connexion point à multi-points entre la tête de réseau et plusieurs récepteurs du contenu multiplexé, et
- sur une liaison point à point établie avec un terminal en utilisant l'adresse unicast de ce terminal, transmet la clé de licence individuellement à ce terminal par l'intermédiaire de cette liaison point à point.

En parallèle, des terminaux connectés au même réseau exécutent un procédé de réception des programmes multimédias embrouillés diffusés. Dans les procédés de réception existants, le terminal :
- écoute l'adresse multicast de diffusion et reçoit le contenu multiplexé,
- démultiplexe le contenu multiplexé reçu pour obtenir le second cryptogramme et le programme multimédia embrouillé,
- déchiffre le second cryptogramme afin d'obtenir le premier cryptogramme,
- déchiffre le premier cryptogramme afin d'obtenir le mot de contrôle, le premier et le second déchiffrements étant réalisés à l'aide de clés de chiffrement différentes choisies dans le groupe composé de la clé d'exploitation et de la clé de licence, et
- désembrouille le programme multimédia embrouillé avec le mot de contrôle.

Dans la suite de cette description, la clé de licence est notée K_{Term}.

Par cryptogramme de la clé K_{Term}, on désigne ici un contenu chiffré construit en chiffrant le résultat de la concaténation de la clé K_{Term} avec, éventuellement, d'autres données. Ainsi, au minimum, un cryptogramme de la clé K_{Term} est obtenu en chiffrant uniquement la clé K_{Term}. Dans d'autres cas, ce cryptogramme est obtenu en chiffrant le résultat de la concaténation de la clé K_{Term} avec d'autres données.

Dans les procédés existants, et contrairement à d'autres procédés existants de diffusion et de réception de programmes multimédias embrouillés par satellite, le mot de contrôle est au moins chiffré deux fois et le déchiffrement du mot de contrôle par chaque terminal fait appel, en plus d'une clé d'exploitation K_{Proc}, à la clé de licence K_{Term} obtenue par l'intermédiaire d'une liaison point à point.

Bien que donnant pleinement satisfaction, il est aujourd'hui souhaitable d'améliorer encore plus la sécurité des procédés existants afin d'empêcher le « piratage » des programmes multimédias par des personnes peu scrupuleuses.

L'invention vise donc à satisfaire ce souhait en proposant un procédé de diffusion et un procédé de réception de programmes multimédias embrouillés plus sûr.

L'invention a donc pour objet un tel procédé de diffusion de programmes multimédias embrouillés dans lequel :
- la tête de réseau procède à une étape d'authentification du terminal, et
- si le terminal a été authentifié avec succès, la tête de réseau envoie au terminal un message de transmission de licence contenant la clé de licence ou un cryptogramme de la clé de licence, par l'intermédiaire de la liaison point à point établie, et
- si le terminal n'est pas authentifié avec succès, la tête de réseau agit de manière à empêcher le désembrouillage complet par ce terminal du programme multimédia embrouillé diffusé.

L'invention a également pour objet un procédé de réception du programme multimédia embrouillé diffusé à l'aide du procédé ci-dessus, dans lequel, lors de l'étape d'authentification, le terminal coopère avec la tête de réseau pour s'authentifier.

Dans les procédés ci-dessus, la clé K_{Term}, ou son cryptogramme est uniquement transmis au terminal si celui-ci a été correctement authentifié au préalable par la tête de réseau. Ceci accroît la sécurité du procédé en rendant la conception de terminaux « pirates » plus difficile.

Les modes de réalisation du procédé de diffusion peuvent comporter une ou plusieurs des caractéristiques suivantes :
- si le terminal a été authentifié avec succès, la tête de réseau procède à une phase d'établissement d'un tunnel sécurisé sur la liaison point à point établie, lors de laquelle la tête de réseau établit, par tirage aléatoire, une clé de session commune au terminal et à la tête de réseau, puis envoie au terminal le message de transmission de licence chiffré avec cette clé de session ;
- la tête de réseau détermine une clé unique propre à identifier le terminal parmi l'ensemble des terminaux raccordés au réseau, à partir :
   - de données préenregistrées connues de la tête de réseau et qui ne lui ont pas été transmises par le terminal, et
   - de données transmises par le terminal à la tête de réseau, les données préenregistrées et les données transmises étant chacune insuffisante à elle seule pour permettre de déterminer la clé unique utilisée par ce terminal, puis vérifie que le terminal est apte à chiffrer ou à déchiffrer correctement des données avec la clé unique qu'elle a déterminée sans que pour cela la tête de réseau ait eu à transmettre au préalable les données préenregistrées ou la clé unique déterminée à ce terminal, et dans l'affirmative établit que le terminal est authentifié ;
- pour vérifier que le terminal est apte à déchiffrer correctement des données chiffrées avec la clé unique déterminée, la tête de réseau envoie un message ECM (Entitlement Control Message) au terminal dans lequel le champ destiné à contenir un cryptogramme d'un mot de contrôle contient un cryptogramme obtenu en chiffrant une donnée inconnue du terminal à l'aide de la clé unique déterminée, puis vérifie que la donnée inconnue du terminal a correctement été déchiffrée par ce terminal ;
- la tête de réseau chiffre la clé de licence au moins à l'aide de la clé de processeur de sécurité du terminal pour obtenir un cryptogramme de la clé de licence, et incorpore ce cryptogramme de la clé de licence dans le message de transmission de licence ;
- la tête de réseau réalise successivement dans le temps un premier et un second chiffrements de la clé de licence afin d'obtenir un cryptogramme de la clé de licence, le premier et le second chiffrements étant réalisés à l'aide de clés de chiffrement différentes choisies dans le groupe composé de la clé de processeur et de la clé de chiffrement de clé de licence, et incorpore seulement ce cryptogramme contenant la clé de licence chiffrée deux fois dans le message de transmission de licence.

Les modes de réalisation du procédé de réception peuvent comporter une ou plusieurs des caractéristiques suivantes :
- lors de la phase d'établissement du tunnel sécurisé :
   a) si le terminal a été authentifié avec succès, ce terminal coopère avec la tête de réseau pour établir la clé de session commune et déchiffre le message de transmission de licence reçu à l'aide de la clé de session commune, et
   b) si le terminal n'est pas authentifié avec succès, le désembrouillage par ce terminal du programme multimédia est empêché ;
- le terminal procède aussi à une étape d'authentification de la tête de réseau et, si la tête de réseau a été authentifiée avec succès, le terminal obtient la clé de licence à partir du message de transmission de licence tandis que si la tête de réseau n'a pas été authentifiée avec succès, le désembrouillage par ce terminal du programme multimédia est empêché ;
- lors de l'étape d'authentification de la tête de réseau, le terminal vérifie que la tête de réseau est apte à chiffrer ou à déchiffrer correctement des données avec la clé unique déterminée par la tête de réseau à partir :
   - de données préenregistrées connues de la tête de réseau et qui ne lui ont pas été transmises par le terminal, et
   - de données transmises par le terminal à la tête de réseau, les données préenregistrées et les données transmises étant chacune insuffisantes à elles seules pour permettre la détermination de la clé unique de ce terminal ;
- le processeur de sécurité déchiffre le cryptogramme de la clé de licence à l'aide de la clé de processeur ;
- le processeur de sécurité et le récepteur réalisent successivement un premier et un second déchiffrements d'un cryptogramme de la clé de licence, le premier et le second déchiffrements étant réalisés à l'aide, respectivement, d'une première et d'une seconde clé de déchiffrement différentes choisies dans le groupe composé de la clé de processeur et de la clé de chiffrement de clé de licence.

L'invention a également pour objet une tête de réseau et un terminal aptes à mettre en œuvre, respectivement, les procédés de diffusion et de réception ci-dessus.

L'invention a également pour objet un récepteur et un processeur de sécurité pour le terminal ci-dessus.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un système de diffusion et de réception de programmes multimédias embrouillés,
- la figure 2 est un premier mode de réalisation d'un procédé de diffusion et de réception de programmes multimédias embrouillés mis en œuvre dans le système de la figure 1,
- les figures 3 et 4 sont un organigramme d'un procédé de transmission d'une clé de licence utilisée dans le procédé de la figure 2, et
- la figure 5 est un organigramme d'un second mode de réalisation d'un procédé de diffusion et de réception de programmes multimédias embrouillés susceptible d'être mis en œuvre dans le système de la figure 1.

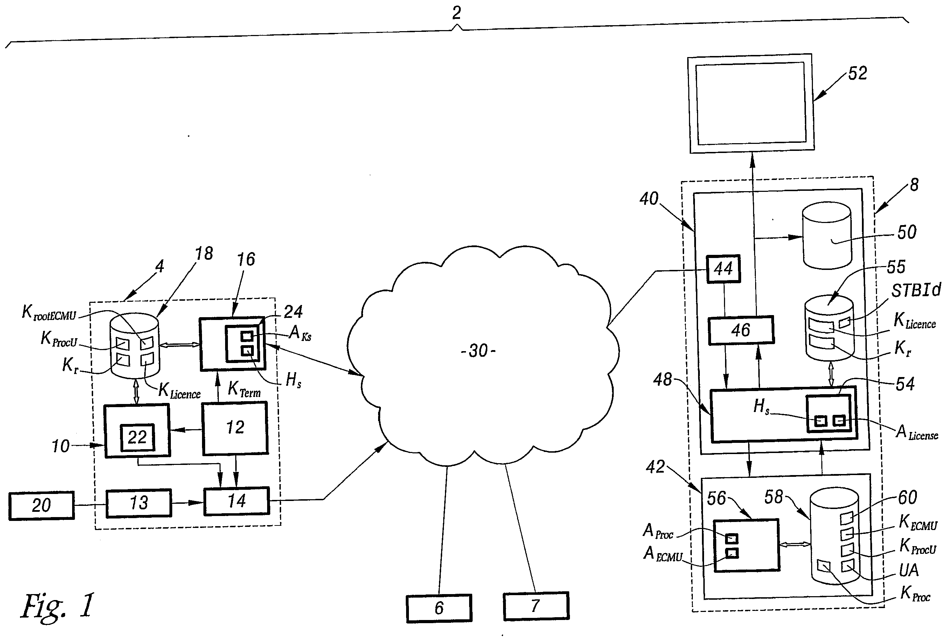

La figure 1 représente un système 2 de diffusion et de réception de programmes multimédias embrouillés. Ce système 2 comprend une ou plusieurs têtes de réseau aptes à diffuser les programmes multimédias sous une forme embrouillée et une multitude de terminaux propres à recevoir ces programmes multimédias embrouillés afin de les désembrouiller pour qu'ils puissent les utiliser. Par exemple, le terminal utilise les programmes multimédias reçus pour générer un flux vidéo affichable en clair sur un écran.

Pour simplifier la figure 1, seule une tête de réseau 4 et trois terminaux 6, 7 et 8 ont été représentés.

La tête de réseau 4 comprend :
- un générateur 10 de messages ECM (Entitlement Control Message),
- un générateur 12 de messages EMM (Entitlement Management Message),
- un embrouilleur 13 propre à embrouiller un programme multimédia à l'aide d'un mot de contrôle CW,
- un module 14 propre à diffuser sur une ou plusieurs adresses multicast de diffusion des contenus multiplexés,
- un gestionnaire 16 de droit d'accès, appelé gestionnaire ORM (On-line Rights Manager), propre à communiquer une clé de licence K_{Term} aux terminaux pour qu'ils puissent désembrouiller les programmes multimédias embrouillés, et
- des moyens de stockage d'informations telle qu'une mémoire 18 contenant des informations secrètes préenregistrées.

Le générateur 10 contient également un module cryptographique 22 apte à exécuter des algorithmes cryptographiques de manière à construire un cryptogramme du mot de contrôle CW.

Le générateur 12 est apte à générer des clés cryptographiques, et notamment la clé de licence K_{Term}, et à transmettre les clés ainsi générées au générateur 10 ainsi qu'au gestionnaire 16.

Le module 14 est apte à multiplexer le programme multimédia embrouillé avec des messages ECM générés par le générateur 10 et des messages EMM générés par le générateur 12 afin d'obtenir un contenu multiplexé. Typiquement, les messages ECM multiplexés avec le programme multimédia embrouillé contiennent un cryptogramme du mot de contrôle CW utilisé pour embrouiller ce programme multimédia. Les messages ECM contiennent également généralement des conditions d'accès associées au programme multimédia embrouillé.

Les messages EMM contiennent généralement des informations, telles que des clés ou des droits, permettant d'autoriser ou d'interdire à un terminal de désembrouiller correctement les programmes multimédias embrouillés reçus pour qu'il puisse les utiliser.

Le module 14 est apte en outre à encapsuler chaque contenu multiplexé dans des trames IP (Internet Protocol).

Ici, les programmes multimédias sont générés par différents opérateurs de service. Pour simplifier la figure 1, seul un opérateur 20 a été représenté.

Le gestionnaire 16 est apte à communiquer la clé de licence K_{Term} par l'intermédiaire d'une liaison point à point établie avec un terminal donné en utilisant son adresse unicast. Le gestionnaire 16 comprend également un module cryptographique 24 apte à exécuter différentes fonctions cryptographiques et notamment un algorithme cryptographique A_{Ks} et une fonction de hachage Hₛ.

Les messages générés par le gestionnaire 16 contenant la clé de licence K_{Term} sont ici appelés messages ECM-U et ont une structure identique aux messages ECM conventionnels. En particulier, ces messages ECM-U comportent un champ destiné à recevoir un cryptogramme et un champ destiné à recevoir des conditions d'accès. Toutefois, contrairement à un message ECM conventionnel qui vise tous les processeurs de sécurité d'un opérateur, un message ECM-U a la particularité de ne pouvoir être traité que par un seul processeur de sécurité pour lequel il a été généré en utilisant des clés individualisées pour ce processeur de sécurité. Il s'agit là d'un adressage individuel implicite. A noter que de façon similaire un message noté ECM-S peut adresser un groupe de processeurs de sécurité partageant un même identifiant de groupe et les mêmes clés.

A titre d'illustration, les informations secrètes contenues dans la mémoire 18 sont ici :
- une clé racine K_{rootECMU},
- une liste de clés de processeur de sécurité K_{ProcU} associant à chaque identifiant UA d'un processeur de sécurité la clé K_{ProcU} préenregistrée dans ce processeur de sécurité,
- une liste de clés de récepteurs Kᵣ associant à chaque identifiant STBId de récepteur une clé Kᵣ, et
- une clé K_{licence} de chiffrement de la clé de licence K_{Term}.

La mémoire 18 est raccordée au générateur 10 et au gestionnaire 16.

Le réseau utilisé pour transmettre les contenus multiplexés ainsi que les messages ECM-U aux différents terminaux est un réseau large bande 30 utilisant le protocole IP (Internet Protocol). On rappelle que ce protocole fait appel à des routeurs propres à acheminer une trame d'informations vers une adresse spécifiée. Dans le protocole IP, une adresse multicast permet d'établir une liaison point à multipoints. Une telle adresse multicast diffère d'une adresse broadcast par le fait que les trames d'informations sont acheminées uniquement à un groupe limité de plusieurs terminaux parmi l'ensemble des terminaux qui sont connectés au réseau 30. L'adresse multicast est également différente d'une adresse unicast qui permet uniquement d'établir une liaison point à point.

On suppose ici que les terminaux 6, 7 et 8 sont identiques et seul le terminal 8 sera décrit plus en détail.

Le terminal 8 comprend un récepteur 40 associé à un processeur de sécurité amovible 42.

Le récepteur 40 est équipé d'un modem 44, d'un module 46 de démultiplexage, désembrouillage et décodage et un module logiciel de contrôle d'accès 48.

Le récepteur 40 comprend aussi une mémoire 50 dans laquelle peuvent être enregistrés les programmes multimédias reçus afin d'être visualisés ultérieurement.

Le modem 44 est connecté au réseau 30 et permet, par exemple, de recevoir les contenus multiplexés et les messages ECM-U transmis par la tête de réseau 4.

Le module 46 est propre notamment à démultiplexer des contenus multiplexés reçus, à transmettre les messages ECM et EMM au module 48, à désembrouiller les programmes multimédias embrouillés de manière à générer un flux multimédia utilisable, par exemple, par son affichage en clair sur un écran 52 connecté au terminal 8.

Le module 48 assure l'interface avec le processeur 42. En particulier, il transmet au processeur 42 les messages ECM et EMM et reçoit de ce processeur 42 le mot de contrôle déchiffré qui doit être utilisé par le module 46 pour désembrouiller les programmes multimédias reçus.

Ici le module 48 est pourvu d'un sous-module cryptographique 54 apte à exécuter des opérations cryptographiques tels que des chiffrements ou des déchiffrements correspondants à ceux mis en œuvre par la tête de réseau ainsi que la fonction de hachage Hₛ.

A cet effet, le sous-module 54 est associé à des moyens de stockage d'informations telle qu'une mémoire 55 contenant en outre les clés cryptographiques secrètes lui permettant de mener à bien les opérations cryptographiques. A titre d'exemple, la mémoire 55 comprend la clé K_{licence} et la clé Kᵣ. Ces clés ont, par exemple, été préchargées dans le terminal 40 lors de sa fabrication ou ont été reçues par le terminal 40 par l'intermédiaire d'un message EMM. La mémoire 55 comprend aussi un identifiant STBId identifiant de façon unique le récepteur 40 parmi tous les récepteurs du système 2.

Le processeur 42 est, par exemple, une carte à puce. Ce processeur 42 est destiné à exécuter toutes les opérations - de sécurité ainsi que le contrôle d'accès aux programmes multimédias. A cet effet, il comporte notamment un module 56 de chiffrement et de déchiffrement ainsi qu'une mémoire non volatile 58.

Le module 56 est en particulier apte à exécuter des algorithmes de déchiffrement et de chiffrement correspondants à ceux mis en œuvre par la tête de réseau 4.

La mémoire 58 contient entre autre :
- des titres d'accès et des clés 60,
- un identifiant UA identifiant de façon unique ce processeur de sécurité parmi l'ensemble des processeurs de sécurité utilisés dans le système 2,
- deux clés uniques préenregistrées K_{ECMU} et K_{ProcU} propres à identifier ce processeur de sécurité parmi l'ensemble des processeurs de sécurité utilisés dans le système 2,
- une clé d'exploitation K_{Proc}.

Les deux clés K_{ECMU} et K_{ProcU} sont individualisées à ce processeur de sécurité en relation avec l'identifiant UA. Ces deux clés K_{ECMU} et K_{ProcU} ainsi que l'identifiant UA sont typiquement préchargées dans la mémoire 58 lors de la fabrication du processeur de sécurité, lors de la configuration de celui-ci ou lors de son utilisation par l'intermédiaire de message EMM.

La clé K_{Proc} est la clé utilisée par la tête de réseau pour produire le cryptogramme du mot de contrôle inséré dans les messages ECM diffusés vers chacun des terminaux du système 2. Commune à tous les terminaux de l'opérateur, cette clé est typiquement chargée dans la mémoire 58 grâce à un message EMM transmis par la tête de réseau. Typiquement ce message EMM est diffusé sur une adresse multicast de diffusion. Par exemple, ce message EMM est multiplexé avec le programme multimédia embrouillé puis diffusé vers les terminaux.

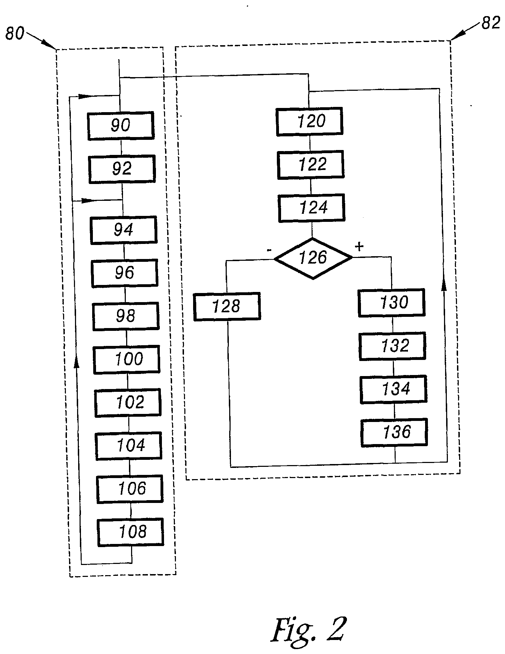

Le fonctionnement du système 2 va maintenant être décrit en regard des figures 2 à 4.

Lors du fonctionnement du système 2, la tête de réseau 4 exécute un procédé 80 de diffusion de programmes multimédias embrouillés et chacun des terminaux exécute en parallèle un procédé 82 de réception des programmes multimédias diffusés par la tête de réseau 4.

Initialement, au début du procédé 80, lors d'une étape 90, le générateur 12 génère une clé de licence K_{Term}. Ensuite, lors d'une étape 92, le générateur 12 transmet cette clé K_{Term} au générateur 10 et au gestionnaire 16.

Ensuite, lors d'une étape 94, la tête de réseau génère un mot de contrôle CW puis, lors d'une étape 96, l'embrouilleur 13 embrouille le programme multimédia à l'aide de ce mot de contrôle.

A ce stade là, lors d'une étape 98, le générateur 10 chiffre par le module 22 le mot de contrôle CW en utilisant un algorithme de chiffrement A_{Term} et la clé K_{Term} générée par le générateur 12. A l'issue de l'étape 98, un premier cryptogramme CW*_{KTerm} du mot de contrôle CW par la clé K_{Term} est obtenu.

Alors, lors d'une étape 100, le générateur 10 chiffre par le module 22 le cryptogramme CW*_{KTerm} à l'aide de la clé K_{Proc} et d'un algorithme de chiffrement A_{Proc}. A l'issue de l'étape 100, un cryptogramme (CW*K_{Term})*_{KProc} du précédent cryptogramme CW*_{KTerm} est obtenu.

Lors d'une étape 102, le générateur 10 construit un message ECM contenant le cryptogramme (CW*K_{Term})*_{KProc} et des conditions d'accès.

Ensuite, lors d'une étape 104, le message ECM construit, d'éventuels messages EMM, ainsi que le programme multimédia embrouillé sont multiplexés ensemble pour former un contenu multiplexé. Lors d'une étape 106, ce contenu multiplexé est encapsulé dans des trames IP (Internet Protocol). Le contenu multiplexé encapsulé dans des trames IP est alors, lors d'une étape 108, diffusé vers une ou plusieurs adresses multicast de diffusion.

Les étapes 94 à 108 sont réitérées à chaque fois qu'un programme multimédia est embrouillé à l'aide d'un nouveau mot de contrôle. Les étapes 90 à 108 sont quant à elles réitérées à chaque fois que la clé K_{Term} est modifiée.

Le procédé de réception 82 est exécuté à l'identique par chacun des terminaux du système 2. Pour simplifier la description, ce procédé sera décrit ici uniquement dans le cas du terminal 8.

Initialement, lors d'une étape 120, le terminal 8 écoute l'adresse multicast de diffusion sur laquelle sont diffusés les programmes multimédias. Ensuite, lors d'une étape 122, les contenus multiplexés diffusés sont reçus puis démultiplexés.

Lors d'une étape 124, les messages ECM et EMM extraits du contenu multiplexé sont alors transmis par l'intermédiaire du module 48 au processeur de sécurité 42. Lors d'une étape 126, le processeur de sécurité 42 compare les conditions d'accès contenues dans le message ECM aux titres d'accès 60.

Si les titres d'accès enregistrés dans la mémoire 58 ne correspondent pas aux conditions d'accès reçues, le processeur de sécurité agit alors, lors d'une étape 128, de manière à empêcher le désembrouillage du programme multimédia embrouillé reçu. Par exemple, le processeur de sécurité ne déchiffre pas le mot de contrôle contenu dans le message ECM ou ne transmet pas le mot de contrôle déchiffré au récepteur 40. Lors de l'étape 128, le processeur 42 peut également transmettre un mot de contrôle erroné au récepteur 40 à la place du mot de contrôle correct.

Dans le cas où les titres d'accès correspondent aux conditions d'accès reçues, lors d'une étape 130, le module 56 déchiffre le cryptogramme (CW*K_{Term})*_{KProc} à l'aide de la clé d'exploitation K_{Proc} contenue dans la mémoire 58. Ainsi, à l'issue de l'étape 130, le cryptogramme CW*_{KTerm} est obtenu.

Ensuite, le processeur 42 transmet le cryptogramme CW*_{KTerm} au récepteur 40, lors d'une étape 132.

Lors d'une étape 134, le module 48 et plus précisément le sous-module 54 déchiffre le cryptogramme CW*_{KTerm} avec la clé K_{Term}, reçu au préalable, afin d'obtenir le mot de contrôle CW en clair. Le mot de contrôle CW ainsi obtenu est alors utilisé, lors d'une étape 136, pour désembrouiller le programme multimédia embrouillé reçu.

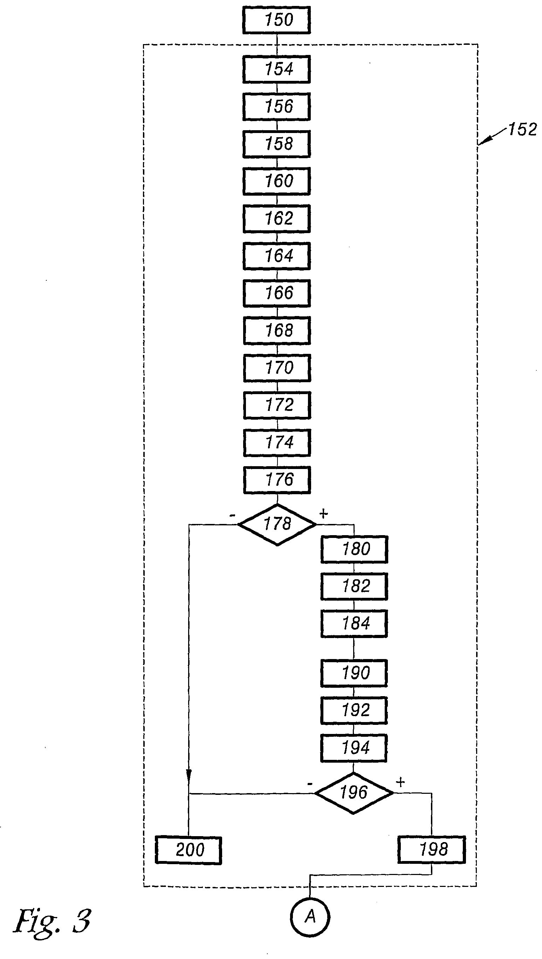

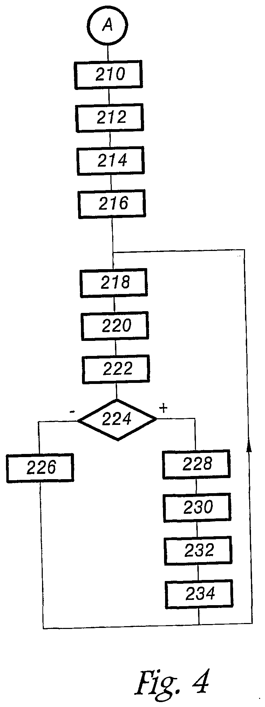

On comprend donc que dans ce mode de réalisation, le mot de contrôle CW est préchiffré à l'aide de la clé K_{Term} de sorte que le désembrouillage des programmes multimédias reçus n'est possible que si la tête de réseau a transmis au préalable la clé K_{Term} au terminal. La façon dont la tête de réseau transmet la clé K_{Term} à chacun des terminaux va maintenant être décrite en regard des figures 3 et 4 dans le cas particulier du terminal 8.

Pour que le terminal 8 puisse désembrouiller des programmes multimédias embrouillés reçus conformément au procédé de la figure 2, une liaison point à point est établie, lors d'une étape 150, entre ce terminal et le gestionnaire 16, typiquement à l'initiative du terminal. Par exemple, le terminal 8 déclenche l'établissement de cette liaison point à point lorsque celui-ci est mis sous tension ou lorsque celui-ci est activé. Pour établir cette liaison point à point, le terminal 8 utilise l'adresse unicast du gestionnaire 16.

Ensuite, la tête de réseau et le terminal 8 procèdent à une phase 152 d'établissement d'un tunnel sécurisé sur cette liaison point à point.

Plus précisément, lors d'une étape 154, le module 48 envoie par l'intermédiaire de la liaison point à point une requête pour obtenir une licence lui permettant de désembrouiller les programmes multimédias. Cette requête contient un identifiant de session IDₛₑₛₛᵢₒₙ, l'identifiant STBId, un identifiant SOID de l'opérateur ainsi que l'identifiant UA. L'identifiant IDₛₑₛₛᵢₒₙ est généré par tirage aléatoire lors de chaque établissement d'un tunnel sécurisé.

Lors d'une étape 156, le gestionnaire 16 reçoit cette requête.

En réponse à cette requête, le gestionnaire 16 :
- génère un nombre aléatoire Alea_{Auth} et une clé de session Kₛ par tirage aléatoire, lors d'une étape 158,
- détermine à partir de l'identifiant UA reçu une clé unique K_{ECMU} correspondant à la clé K_{ECMU} contenue dans la mémoire 58 du terminal 8, lors d'une étape 160,
- concatène l'identifiant IDₛₑₛₛᵢₒₙ, le nombre Alea_{Auth} et la clé de session Kₛ puis chiffre le résultat de cette concaténation à l'aide de la clé Kᵣ correspondant à l'identifiant STBId reçu, afin d'obtenir un premier cryptogramme, lors d'une étape 162,
- chiffre ce premier cryptogramme avec la clé K_{ECMU} déterminée lors de l'étape 160 afin d'obtenir un second cryptogramme, lors d'une étape 164,
- encapsule ce second cryptogramme dans un message ECM-U en insérant le second cryptogramme dans le champ prévu pour recevoir un cryptogramme d'un mot de contrôle dans un message ECM, lors d'une étape 166, puis
- envoie ce message ECM-U au terminal 8 par l'intermédiaire de la liaison point à point, lors d'une étape 168.

Lors de l'étape 160, la clé K_{ECM} est déterminée à partir de l'identifiant UA reçu et de données préenregistrées dans la mémoire 18. Par exemple ici, la clé K_{ECMU} est générée par diversification de la clé racine K_{RootECMU} avec l'identifiant UA reçu.

Lors d'une étape 170, le terminal 8 reçoit le message ECM-U et le module 48 transmet ce message ECM-U au processeur 42.

Ensuite, lors d'une étape 172, le processeur 42 déchiffre le second cryptogramme à l'aide de la clé K_{ECMU} contenue dans sa mémoire 58 afin d'obtenir le premier cryptogramme.

Lors d'une étape 174, le premier cryptogramme ainsi obtenu est transmis au récepteur 40 et, lors d'une étape 176, le module 48 et plus précisément le sous-module 54 déchiffre ce premier cryptogramme à l'aide de la clé Kᵣ contenue dans sa mémoire 52.

Ensuite, lors d'une étape 178, le module 48 compare l'identifiant IDₛₑₛₛᵢₒₙ déchiffré lors de l'étape 176 à celui envoyé lors de l'étape 154.

Si les identifiants IDₛₑₛₛᵢₒₙ correspondent, alors le module 58 applique, lors d'une étape 180, la fonction de hachage Hₛ au nombre Alea_{Auth} afin d'obtenir un résultat Rₕ. La fonction de hachage Hₛ est ici une fonction de hachage à sens unique.

Ensuite, lors d'une étape 182, le module 48 chiffre le résultat Rₕ à l'aide de la clé de session Kₛ déchiffrée lors de l'étape 176 afin d'obtenir un cryptogramme (Rₕ)*_{Ks}.

Lors d'une étape 184, le terminal 8 transmet le cryptogramme (Rₕ)*_{Ks} à la tête de réseau 4 par l'intermédiaire de la liaison point à point.

Lors d'une étape 190, le gestionnaire 16 reçoit le cryptogramme (Rₕ)*_{Ks} puis, puis lors d'une étape 192, déchiffre ce cryptogramme à l'aide de la clé Kₛ générée lors de l'étape 158, de façon à retrouver le résultat Rₕ.

Lors d'une étape 194, le gestionnaire 16 applique au nombre Alea_{Auth} généré lors de l'étape 158, la même fonction de hachage Hₛ que celle qu'aurait dû utiliser le terminal 8 pour construire le résultat Rₕ.

Lors d'une étape 196, les résultats Rₕ obtenus à l'issue des étapes 192 et 194 sont comparés. Si les résultats correspondent alors le gestionnaire 16 établit, lors d'une étape 198, que le terminal 8 est authentique et tous les autres messages échangés par l'intermédiaire de la liaison point à point sont chiffrés à l'aide de la clé de session Kₛ.

Dans le cas où les identifiants IDₛₑₛₛᵢₒₙ comparés lors de l'étape 178, ou les résultats Rₕ comparés lors de l'étape 196 ne correspondent pas, alors l'authentification mutuelle du terminal 8 et de la tête de réseau 4 a échoué et aucun tunnel sécurisé de transmission d'informations entre ce terminal et la tête de réseau n'est établi. De plus, lors d'une étape 200, le gestionnaire 16 et/ou le terminal 8 agissent de manière à empêcher le désembrouillage des programmes multimédias embrouillés reçus. Par exemple, lors de l'étape 200, le gestionnaire 16 empêche la transmission de la clé K_{Term} au terminal 8. Typiquement, le gestionnaire 16 interrompt la connexion point à point établie avant que la transmission de la clé K_{Term} n'ait pu être réalisée.

Dans le cas où l'authentification mutuelle du terminal 8 et de la tête de réseau a été réussie, lors d'une étape 210, le gestionnaire 16 chiffre la clé K_{Term} avec la clé K_{licence} afin d'obtenir un cryptogramme (K_{Term})*K_{licence}.

Lors d'une étape 212, ce cryptogramme (K_{Term})*K_{licence} est chiffré à l'aide de la clé KP_{rocU} afin d'obtenir un cryptogramme ((K_{Term})*_{Klicence})*_{KProcU}. Ensuite, lors d'une étape 214, ce cryptogramme ((K_{Term})*_{Klicence})*_{KProcU} est inséré dans un message ECM-U associé à des conditions d'accès à cette clé K_{Term}.

Lors d'une étape 216, ce message ECM-U est transmis par l'intermédiaire du tunnel sécurisé établit entre le terminal 8 et le gestionnaire 16. Ainsi, lors de l'étape 216, ce message est chiffré par le gestionnaire 16 à l'aide de la clé Kₛ.

Lors d'une étape 218, le terminal 8 reçoit ce message ECM-U, puis, lors d'une étape 220, déchiffre le message ECM-U à l'aide de la clé Kₛ.

Lors d'une étape 222, le module 48 transmet le message ECM-U déchiffré au processeur de sécurité.

Lors d'une étape 224, le processeur 42 compare les conditions d'accès contenues dans ce message ECM-U au titre d'accès 60.

Si les conditions d'accès ne correspondent pas au titre d'accès contenu dans la mémoire 58, lors d'une étape 226, le processeur 42 agit de manière à empêcher le déchiffrement des mots de contrôle CW à l'aide de la clé K_{Term} contenue dans ce message ECM-U. Par exemple, le processeur 42 ne déchiffre pas de cryptogrammes de la clé K_{Term}.

Dans le cas contraire, c'est-à-dire si les titres d'accès correspondent aux conditions d'accès, lors d'une étape 228, le module 56 déchiffre le cryptogramme ((K_{Term})*_{Klicence})*_{KProcU} à l'aide de la clé K_{ProcU} contenue dans la mémoire 58 afin de retrouver le cryptogramme (K_{Term})*_{Klicence}.

Le cryptogramme (K_{Term})*_{Klicence} est alors transmis, lors d'une étape 230, au récepteur 40. Lors d'une étape 232, le module 48 et plus précisément le sous-module 54 déchiffre le cryptogramme (K_{Term})*_{Klicence} à l'aide de la clé K_{licence} contenue dans la mémoire 52 afin d'obtenir la clé K_{Term} en clair.

Lors d'une étape 234, la clé K_{Term} en clair est, par exemple, mémorisée dans la mémoire 55 afin d'être utilisée pour déchiffrer les mots de contrôle CW préchiffrés à l'aide de la même clé K_{Term}.

On remarquera que les étapes 154 à 178 forment une étape d'authentification de la tête de réseau par le terminal. Les étapes 158 à 196 forment quant à elles une étape d'authentification du terminal par la tête de réseau.

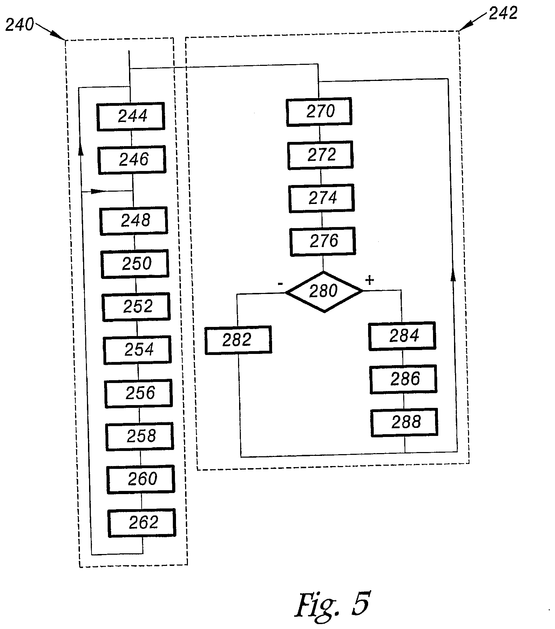

La figure 5 représente un autre procédé 240 de diffusion de programmes multimédias embrouillés susceptibles d'être mis en oeuvre par la tête de réseau 4 et un autre procédé 242 de réception de ces programmes multimédias embrouillés susceptibles d'être mis en œuvre par les terminaux 6 à 8.

Les étapes 244, 246, 248 et 250 du procédé 240 sont identiques respectivement aux étapes 90, 92, 94 et 96 du procédé 80.

Ensuite, lors d'une étape 252, le générateur 10 chiffre le mot de contrôle à l'aide de la clé K_{Proc} de façon à obtenir un cryptogramme CW*.

Lors d'une étape 254, ce cryptogramme CW* ainsi que des conditions d'accès sont incorporés dans un message ECM.

Ensuite, lors d'une étape 256, au moins la partie du message ECM contenant le cryptogramme CW* est surchiffrée avec la clé K_{Term} de manière à obtenir un cryptogramme ECM*.

Lors d'une étape 258, le cryptogramme ECM*, d'éventuels messages EMM et le programme multimédia embrouillé sont multiplexés par le multiplexeur 14 afin d'obtenir un contenu multiplexé.

Ensuite, lors d'étapes 260 et 262, ce contenu multiplexé est encapsulé et diffusé sur le réseau 30 de façon identique à ce qui a été décrit en regard des étapes 106 et 108.

Les étapes 248 à 262 sont réitérées pour chaque nouveau mot de contrôle tandis que les étapes 244 à 262 sont réitérées à chaque fois que la clé K_{Term} est modifiée.

Le procédé 242 débute par des étapes 270 et 272 respectivement identiques aux étapes 120 et 122 du procédé 82.

Ensuite, lors d'une étape 274, le module 48 et plus précisément le sous-module 54 déchiffre le cryptogramme ECM* à l'aide de la clé K_{Term} afin de retrouver le message ECM en clair.

Le message ECM en clair et les éventuels messages EMM contenus dans le contenu multiplexé sont alors transmis au processeur de sécurité 42, lors d'une étape 276.

Lors d'une étape 280, le processeur 42 compare les conditions d'accès contenues dans le message ECM aux titres d'accès 60. Si ces titres d'accès ne correspondent pas aux conditions d'accès, lors d'une étape 282, le processeur 42 agit de façon à empêcher le désembrouillage complet des programmes multimédias embrouillés reçus.

Dans le cas contraire, lors d'une étape 284, le module 56 déchiffre le cryptogramme CW* à l'aide de la clé K_{Proc} afin de retrouver le mot de contrôle CW en clair.

Lors d'une étape 286, ce mot de contrôle CW est alors transmis au récepteur 40.

Puis, lors d'une étape 288, le récepteur 40 désembrouille le programme multimédia embrouillé reçu à l'aide du mot de contrôle CW transmis lors de l'étape 286.

Les étapes 270 à 288 sont réitérées au moins pour chaque nouveau mot de contrôle CW.

Dans ce second mode de réalisation, le mot de contrôle CW est surchiffré à l'aide de la clé K_{Term} au lieu d'être préchiffré. Toutefois, comme dans le mode de réalisation de la figure 2, le désembrouillage des programmes multimédias embrouillés reçus n'est possible que si le terminal a, au préalable, reçu la clé K_{Term}. A cet effet, le procédé de transmission de cette clé K_{Term} déjà décrit en regard des figures 3 et 4 est mis en œuvre, par exemple.

De nombreux autres modes de réalisation sont possibles. Par exemple, d'autres réseaux qu'un réseau utilisant le protocole IP peuvent être utilisés à la place du réseau 30 à partir du moment où ce réseau permet l'utilisation d'adresses multicast et unicast d'une façon similaire à ce que permet le protocole IP.

Le processeur de sécurité 42 peut être intégré au récepteur 40. En variante, les modules 46 et 48 peuvent être implémentés dans un module amovible.

Les différentes fonctionnalités du terminal 8 peuvent être réparties entre différents équipements reliés entre eux par un réseau local. Par exemple, ces différentes fonctionnalités peuvent être réparties entre une passerelle locale appelée « Home Gateway » et un décodeur local, l'un ou l'autre pouvant recevoir le processeur de sécurité 42. La passerelle est alors l'élément connecté au réseau 30 qui écoute les adresses multicast ou unicast. Ensuite, les informations reçues à partir du réseau 30 sont transmises, sur le réseau local, au décodeur local. Dans une telle architecture, la passerelle peut, par exemple, prendre en charge le traitement des messages ECM afin d'en extraire les mots de contrôle nécessaires au désembrouillage des programmes multimédias embrouillés. D'autres architectures pour le terminal 8 sont bien évidemment possibles.

Le modem 44 peut être intégré dans le récepteur 40 ou être placé à l'extérieur.

Le procédé des figures 3 et 4 a été décrit dans le cas particulier où le message ECM-U contient une condition d'accès. En variante, une telle condition d'accès n'est pas mise en œuvre de sorte que le terminal est autorisé à déchiffrer la clé K_{Term} quels que soient les titres d'accès 60 enregistrés dans sa mémoire 58.

Les modes de réalisation des figures 2 et 5 peuvent être combinés de manière à appliquer à la fois le préchiffrement et le surchiffrement du mot de contrôle. Dans ces conditions, le déchiffrement du mot de contrôle CW nécessite l'utilisation de deux clés de licence K_{Term}, une utilisée pour réaliser le préchiffrement, et l'autre utilisée pour réaliser le surchiffrement.

Les clés K_{Term}, K_{licence} et K_{ProcU} peuvent être soit uniques pour chaque terminal du système 2 ou communes à un groupe de terminaux du système 2 ou alors communes à l'ensemble des terminaux du système 2.

Ici, le système 2 a été décrit dans le cas particulier où la clé K_{Term} est transmise dans un message ECM-U ayant une structure identique à celle d'un message ECM. En variante, la clé K_{Term} est transmise par le gestionnaire 16 au terminal 8 en utilisant un message EMM et de préférence un message EMM-U.

Les clés individualisées K_{ECMU} et K_{ProcU} en fonction de l'identifiant UA peuvent être obtenues soit par diversification d'une clé racine à l'aide de l'identifiant UA, soit à partir d'une base de données associant à chaque identifiant UA les clés K_{ECMU} et K_{ProcU} uniques. De même, la clé Kᵣ de récepteur peut être obtenue par diversification d'une clé racine à partir de l'identifiant STBId ou à partir d'une base de données associant à chaque identifiant STBId une clé Kᵣ.

Le système 2 et les procédés décrits ici s'appliquent aussi bien à des programmes multimédias diffusés en direct tel que, par exemple, à une émission télévisée diffusée en direct, qu'à des programmes multimédias préenregistrés et téléchargeables à la demande par un utilisateur du terminal tel que, par exemple, dans le cadre d'un service VOD (Vidéo On Demand).

Le système 2 ainsi que les procédés décrits ici s'appliquent également à un service d'exploitation de PVR (Personal Video Recorder) qui permet d'enregistrer dans et de relire des contenus multimédias à partir de la mémoire 50, tel que décrit, par exemple, dans la demande de brevet FR 2 835 178. Pour ce service PVR, les messages ECM associés aux contenus reçus par le terminal comprennent :
a) une partie dédiée à la visualisation directe du contenu, et
b) une partie dédiée à l'enregistrement et à la relecture du programme multimédia reçu.

La partie a) contient les éléments usuels d'un message ECM notamment le cryptogramme du mot de contrôle CW.

La partie b) contient également des éléments usuels d'un message ECM tel que des conditions d'accès et un cryptogramme du mot de contrôle mais ceux-ci sont destinés à être extraits puis, après un traitement local dans le terminal, à être enregistrés avec le programme multimédia enregistré dans la mémoire 50. Ces messages ECM enregistrés permettent alors la relecture du programme multimédia enregistré. Le système et le procédé décrits ici s'appliquent également aux ECM enregistrés.

Les modes de réalisation du système et des procédés décrits ici présentent les avantages suivants :
- utiliser un tunnel sécurisé pour transmettre la clé K_{Term} au terminal accroît la sécurité du système,
- le fait que la tête de réseau vérifie que le terminal est apte à chiffrer ou à déchiffrer correctement des données avec la clé K_{ECMU} déterminée lors de l'étape 160 permet d'authentifier de façon fiable le terminal car seule la tête de réseau 4 peut déterminer la clé K_{ECMU} associée à l'identifiant unique UA du terminal de sorte que seul un terminal authentique peut posséder dans sa mémoire une clé K_{ECMU} correspondant à celle ainsi déterminée par la tête de réseau,
- utiliser la structure d'un message ECM pour soumettre au terminal un défi d'authentification lors de l'étape 168, simplifie la réalisation du système car il n'est pas nécessaire de développer une nouvelle structure de message pour soumettre ce défi d'authentification,
- faire intervenir la clé K_{ProcU} dans le chiffrement de la clé K_{Term}, rend le piratage du procédé plus difficile car celui-ci fait nécessairement intervenir le processeur de sécurité 42 qui est un élément difficile à falsifier,
- réaliser un double chiffrement de la clé K_{Term} transmise au terminal à l'aide, d'une part, d'une clé du récepteur (ici la clé K_{licence}) et, d'autre part, d'une clé du processeur de sécurité (ici la clé K_{ProcU}) permet de créer un appariement entre ce processeur de sécurité et ce récepteur,
- procéder à l'authentification de la tête de réseau par le terminal accroît également la sécurité de ce système,
- vérifier que la tête de réseau est apte à chiffrer et/ou à déchiffrer correctement des données avec la clé K_{ECMU} qu'elle a déterminée permet d'authentifier de façon fiable cette tête de réseau car seule la tête de réseau authentique peut déterminer la clé K_{ECMU} utilisée par le terminal et associée à l'identifiant unique UA de celui-ci,
- préchiffrer le mot de contrôle à l'aide de la clé K_{Term} présente l'avantage que ce mot de contrôle n'est alors transmis du côté du terminal que sous forme chiffrée entre le processeur 42 et le récepteur 40, ce qui protège l'interface entre ce processeur et ce récepteur.

## Revendications

1. Procédé de diffusion, par l'intermédiaire d'un réseau large bande, d'un programme multimédia embrouillé dans lequel :
- une information peut être acheminée vers une adresse multicast de sorte que seul un groupe de plusieurs terminaux correspondants à cette adresse multicast reçoit l'information tandis que d'autres terminaux connectés au même réseau ne reçoivent pas cette information, et
- une information peut être acheminée vers une adresse unicast de sorte que seul le terminal correspondant à cette adresse unicast reçoit l'information tandis que les autres terminaux connectés au même réseau ne la reçoivent pas,
et dans lequel une tête de réseau (4) :
- embrouille (en 96 ; 250) le programme multimédia avec un mot de contrôle,
- chiffre (en 98 ; 252) le mot de contrôle afin d'obtenir un premier cryptogramme,
- chiffre (en 100 ; 256) le premier cryptogramme afin d'obtenir un second cryptogramme, le premier et le second chiffrements étant réalisés à l'aide de clés de chiffrement différentes choisies dans le groupe composé d'une clé d'exploitation (K_{Proc}) et d'une clé de licence (K_{Term})
- multiplexe (en 104 ; 258) le second cryptogramme avec le programme multimédia embrouillé pour obtenir un contenu multiplexé,
- diffuse (en 108 ; 262) le contenu multiplexé vers une adresse multicast de diffusion afin d'établir une connexion point à multi-points entre la tête de réseau et plusieurs récepteurs du contenu multiplexé, et
- sur une liaison point à point établie (en 150) avec un terminal en utilisant l'adresse unicast de ce terminal, transmet la clé de licence individuellement à ce terminal par l'intermédiaire de cette liaison point à point,
**caractérisé en ce que** ladite clé d'exploitation est commune à tous les terminaux d'un opérateur et **en ce que** avant la transmission de la clé de licence :
- la tête de réseau procède à une étape d'authentification du terminal dans laquelle la tête de réseau :
- - détermine (en 160) une clé unique (K_{ECMU}) propre à identifier le terminal parmi l'ensemble des terminaux raccordés au réseau, à partir :
▪ de données préenregistrées connues de la tête de réseau et qui ne lui ont pas été transmises par le terminal,
▪ et
▪ de données transmises (UA) par le terminal à la tête de réseau, les données préenregistrées et les données transmises étant chacune insuffisantes à elles seules pour permettre de déterminer la clé unique (K_{ECMU}) utilisée par ce terminal,
- - vérifie (en 196) que le terminal est apte à chiffrer ou à déchiffrer correctement des données avec la clé unique qu'elle a déterminée sans que pour cela la tête de réseau ait eu à transmettre au préalable les données préenregistrées ou la clé unique (K_{ECMU}) déterminée à ce terminal, la vérification comprenant :
▪ l'envoi, par la tête de réseau (en 168) d'un message ECM (Entitlement Control Message) au terminal dans lequel le champ destiné à contenir un cryptogramme d'un mot de contrôle contient un cryptogramme obtenu en chiffrant une donnée inconnue (Alea_{Auth}) du terminal à l'aide de la clé unique (K_{ECMU}) déterminée,
▪ puis la vérification (en 196) que la donnée inconnue du terminal a correctement été déchiffrée par ce terminal,
- et dans l'affirmative établit (en 198) que le terminal est authentifié,
- et
- si le terminal a été authentifié avec succès, la tête de réseau envoie (en 216) au terminal un message de transmission de licence contenant la clé de licence ou un cryptogramme de la clé de licence, par l'intermédiaire de la liaison point à point établie, et
- si le terminal n'est pas authentifié avec succès, la tête de réseau agit (en 200) de manière à empêcher le désembrouillage complet par ce terminal du programme multimédia embrouillé diffusé.

2. Procédé selon la revendication 1, dans lequel la tête de réseau procède à une phase d'établissement d'un tunnel sécurisé sur la liaison point à point établie, lors de laquelle, si le terminal a été authentifié avec succès :
- la tête de réseau établit, par tirage aléatoire, une clé de session commune au terminal et à la tête de réseau, puis
- envoie au terminal le message de transmission de licence chiffré avec cette clé de session.

3. Procédé selon l'une quelconque des revendications précédentes pour un terminal équipé d'un processeur de sécurité contenant une clé de processeur de sécurité (K_{ProcU}), dans lequel la tête de réseau chiffre (en 212) la clé de licence (K_{Term}) au moins à l'aide de la clé (K_{ProcU}) de processeur de sécurité du terminal pour obtenir un cryptogramme de la clé de licence (K_{Term}), et incorpore ce cryptogramme de la clé de licence (K_{Term}) dans le message de transmission de licence.

4. Procédé selon l'une quelconque des revendications précédentes pour un terminal équipé d'un récepteur contenant une clé de chiffrement de clé de licence (K_{licence}) et d'un processeur de sécurité amovible contenant une clé de processeur de sécurité (K_{ProcU}), la clé de processeur étant initialement connue uniquement du processeur de sécurité et la clé de chiffrement de clé de licence étant initialement connue du récepteur, dans lequel la tête de réseau :
- réalise successivement dans le temps un premier et un second chiffrements (en 210, 212) de la clé de licence (K_{Term}) afin d'obtenir un cryptogramme de la clé de licence (K_{Term}), le premier et le second chiffrements étant réalisés à l'aide de clés de chiffrement différentes choisies dans le groupe composé de la clé de processeur (K_{ProcU}) et de la clé de chiffrement de clé de licence (K_{licence}), et
- incorpore ce second cryptogramme de la clé de licence dans le message de transmission de licence.

5. Procédé de réception d'un programme multimédia embrouillé diffusé à l'aide d'un procédé de diffusion selon l'une quelconque des revendications précédentes, dans lequel le terminal :
- écoute (en 120 ; 270) l'adresse multicast de diffusion et reçoit le contenu multiplexé,
- démultiplexe (en 122 ; 272) le contenu multiplexé reçu pour obtenir le second cryptogramme et le programme multimédia embrouillé,
- déchiffre (en 130 ; 274) le second cryptogramme afin d'obtenir le premier cryptogramme,
- déchiffre (en 134 ; 284) le premier cryptogramme afin d'obtenir le mot de contrôle, le premier et le second déchiffrements étant réalisés à l'aide de clés de chiffrement différentes choisies dans le groupe composé de la clé d'exploitation (K_{Proc}) et de la clé de licence (K_{Term}),
et
- désembrouille (en 136 ; 288) le programme multimédia embrouillé avec le mot de contrôle, **caractérisé en ce que** lors de l'étape d'authentification, le terminal coopère avec la tête de réseau pour s'authentifier,
dans lequel le terminal procède aussi à une étape d'authentification de la tête de réseau et, si la tête de réseau a été authentifiée avec succès, le terminal obtient (en 232) la clé de licence à partir du message de transmission de licence,
tandis que si la tête de réseau n'a pas été authentifiée avec succès, le désembrouillage par ce terminal du programme multimédia est empêché (en 200),
et dans lequel, pour un terminal apte à chiffrer ou à déchiffrer des cryptogrammes à l'aide d'une clé unique prédéterminée (K_{ECMU}), cette clé unique (K_{ECMU}) identifiant ce terminal de façon unique parmi l'ensemble des terminaux connectés au réseau,
lors de l'étape d'authentification de la tête de réseau, le terminal vérifie (en 178) que la tête de réseau est apte à chiffrer ou à déchiffrer correctement des données avec la clé unique (K_{ECMU}) déterminée par la tête de réseau à partir :
- de données préenregistrées connues de la tête de réseau et qui ne lui ont pas été transmises par le terminal, et
- de données (UA) transmises par le terminal à la tête de réseau, les données préenregistrées et les données transmises étant chacune insuffisantes à elles seules pour permettre la détermination de la clé unique (K_{ECMU}) de ce terminal.

6. Procédé selon la revendication 5, pour recevoir un programme multimédia diffusé selon un procédé conforme à la revendication 2, dans lequel lors de la phase d'établissement du tunnel sécurisé :
a) si le terminal a été authentifié avec succès, ce terminal coopère avec la tête de réseau pour établir la clé de session commune (Kₛ) et déchiffre (en 220) le message de transmission de licence reçu à l'aide de la clé de session commune, et
b) si le terminal n'est pas authentifié avec succès, le désembrouillage par ce terminal du programme multimédia est empêché (en 200).

7. Procédé de réception d'un programme multimédia diffusé à l'aide d'un procédé de diffusion conforme à la revendication 3, et à l'aide d'un terminal équipé d'un processeur de sécurité contenant une clé de processeur (K_{ProcU}), dans lequel le processeur de sécurité déchiffre (en 228) le cryptogramme de la clé de licence (K_{Term}) à l'aide de la clé de processeur (K_{ProcU}).

8. Procédé selon l'une quelconque des revendications 5 à 7 pour un terminal équipé d'un récepteur contenant une clé de chiffrement de clé de licence (K_{licence}) et d'un processeur de sécurité amovible contenant une clé de processeur (K_{ProcU}), la clé de processeur étant initialement connue uniquement du processeur de sécurité et la clé de chiffrement de clé de licence étant initialement connue du récepteur, dans lequel le processeur de sécurité et le récepteur réalisent successivement un premier et un second déchiffrements (en 228, 232) d'un cryptogramme de la clé de licence (K_{Term}), le premier et le second déchiffrements étant réalisés à l'aide, respectivement, d'une première et d'une seconde clé de déchiffrement différentes choisies dans le groupe composé de la clé de processeur (K_{ProcU}) et de la clé de chiffrement de clé de licence (K_{licence}).

9. Tête de réseau (4), **caractérisée en ce que** cette tête de réseau est apte à mettre en oeuvre un procédé de diffusion de programmes multimédias embrouillés conforme à l'une quelconque des revendications 1 à 4.

10. Terminal (8) de réception de programmes multimédias embrouillés, **caractérisé en ce que** ce terminal est apte à mettre en oeuvre un procédé de réception conforme à l'une quelconque des revendications 5 à 8.

11. Récepteur (40) de programmes multimédias embrouillés, **caractérisé en ce qu'**il est apte à être associé avec un processeur de sécurité amovible pour former un terminal de réception conforme à la revendication 10.

12. Processeur (42) de sécurité amovible, **caractérisé en ce qu'**il est apte à être associé avec un récepteur de programmes multimédias embrouillés pour former un terminal de réception conforme à la revendication 10.

## Patentansprüche

1. Verfahren zum Senden eines verwürfelten Multimediaprogramms über ein Breitbandnetz, bei dem:
- eine Information an eine Multicast-Adresse versendet werden kann, derart dass eine Gruppe von mehreren Endgeräten, die dieser Multicast-Adresse entsprechen, die Information empfängt, während andere Endgeräte, die an dasselbe Netz angeschlossen sind, diese Information nicht empfangen, und
- eine Information an eine Unicast-Adresse versendet werden kann, derart dass nur das dieser Unicast-Adresse entsprechende Endgerät die Information empfängt, während die anderen Endgeräte, die an dasselbe Netz angeschlossen sind, diese Information nicht empfangen,
und bei dem eine Kopfstelle (4) des Netzes:
- das Multimediaprogramm mit einem Steuerwort verwürfelt (in 96; 250),
- das Steuerwort verschlüsselt (in 98; 252), um ein erstes Kryptogramm zu erhalten,
- das erste Kryptogramm verschlüsselt (in 100; 256), um ein zweites Kryptogramm zu erhalten, wobei die erste und die zweite Verschlüsselung mithilfe von unterschiedlichen Verschlüsselungsschlüsseln durchgeführt werden, die ausgewählt sind aus der Gruppe bestehend aus einem Nutzungsschlüssel (K_{Proc}) und einem Lizenzschlüssel (K_{Term}),
- das zweite Kryptogramm mit dem verwürfelten Multimediaprogramm multiplexiert (in 104; 258), um einen multiplexierten Inhalt zu erhalten,
- den multiplexierten Inhalt zu einer Sende-Multicast-Adresse sendet (in 108; 262), um eine Verbindung Punkt zu Multipunkt zwischen der Kopfstelle des Netzes und mehreren Empfängern des multiplexierten Inhalts herzustellen, und
- auf einer mit einem Endgerät unter Verwendung der Unicast-Adresse dieses Endgerätes hergestellten Punkt zu Punkt Verbindung (in 150) den Lizenzschlüssel an dieses Endgerät individuell über diese Punkt zu Punkt Verbindung überträgt,
**dadurch gekennzeichnet, dass** der Nutzungsschlüssel allen Endgeräten eines Betreibers gemeinsam ist und dass vor der Übertragung des Lizenzschlüssels:
- die Kopfstelle des Netzes einen Authentifizierungsschritt des Endgerätes durchführt, bei dem die Kopfstelle des Netzes:
- - einen eindeutigen Schlüssel (K_{ECMU}) bestimmt (in 160), der geeignet ist, das Endgerät aus der Gesamtheit der an das Netz angeschlossenen Endgeräten zu identifizieren, aus:
▪ der Kopfstelle des Netzes bekannten vorgespeicherten Daten und die ihr nicht von dem Endgerät übertragen wurden,
▪ und
▪ von dem Endgerät an die Kopfstelle des Netzes übertragenen Daten (UA), wobei die vorgespeicherten Daten und die übertragenen Daten jeweils alleine nicht ausreichend sind, um eine Bestimmung des einzigartigen Schlüssels (K_{ECMU}) zu ermöglichen, der von diesem Endgerät verwendet wird,
- - überprüft (in 196), dass das Endgerät geeignet ist, die Daten mit dem einzigartigen Schlüssel, den sie bestimmt hat, ohne dass dafür die Kopfstelle des Netzes vorher die vorgespeicherten Daten oder den an diesem Endgerät bestimmten einzigartigen Schlüssel (K_{ECMU}) übertragen musste, zu verschlüsseln oder zu entschlüsseln, wobei die Überprüfung umfasst:
▪ von der Kopfstelle des Netzes Senden (in 168) einer Nachricht ECM (Entitlement Control Message) an das Endgerät, in der das Feld, das vorgesehen ist, ein Kryptogramm eines Steuerwortes zu enthalten, ein Kryptogramm enthält, das erhalten wird, indem ein unbekanntes Datenwort (Alea_{Auth}) des Endgerätes mithilfe des bestimmten einzigartigen Schlüssels (K_{ECMU}) verschlüsselt wird,
▪ dann Überprüfen (in 196), dass das unbekannte Datenwort des Endgerätes von diesem Endgerät korrekt entschlüsselt wurde,
- und im zutreffenden Fall festlegt, dass das Endgerät authentifiziert ist,
- und
- wenn das Endgerät mit Erfolg authentifiziert wurde, die Kopfstelle des Netzes an das Endgerät eine Nachricht der Lizenzübertragung, die den Lizenzschlüssel oder ein Kryptogramm des Lizenzschlüssels enthält, über die erstellte Punkt zu Punkt Verbindung schickt (in 216) und
- wenn das Endgerät nicht mit Erfolg authentifiziert wurde, die Kopfstelle des Netzes so handelt (in 200), dass die vollständige Entwürfelung des gesendeten verwürfelten Multimediaprogramms verhindert wird.

2. Verfahren nach Anspruch 1, bei dem die Kopfstelle des Netzes eine Phase des Erstellens eines gesicherten Tunnels auf der erstellten Punkt zu Punkt Verbindung durchführt, während der, wenn das Endgerät mit Erfolg authentifiziert wurde:
- die Kopfstelle des Netzes durch Zufallsauswahl einen dem Endgerät und der Kopfstelle des Netzes gemeinsamen Sitzungsschlüssel erstellt, dann
- dem Endgerät die mit diesem Sitzungsschlüssel verschlüsselte Nachricht der Lizenzübertragung schickt.

3. Verfahren nach einem beliebigen der vorhergehenden Ansprüche für ein mit einem Sicherheitsprozessor ausgerüstetes Endgerät, der einen Sicherheitsprozessorschlüssel (K_{ProcU}) enthält, wobei die Kopfstelle des Netzes den Lizenzschlüssel (K_{Term}) mindestens mithilfe des Sicherheitsprozessorschlüssels (K_{ProcU}) des Endgeräts verschlüsselt (in 212), um ein Kryptogramm des Lizenzschlüssels (K_{Term}) zu erhalten, und dieses Kryptogramm des Lizenzschlüssels (K_{Term}) in die Nachricht der Lizenzübertragung einbettet.

4. Verfahren nach einem beliebigen der vorhergehenden Ansprüche für ein Endgerät, das mit einem Empfänger, der einen Lizenzschlüssel-Verschlüsselungsschlüssel (K_{licence}) enthält, und einem entfernbaren Sicherheitsprozessor, der einen Sicherheitsprozessorschlüssel (K_{ProcU}) enthält, ausgerüstet ist, wobei der Prozessorschlüssel ursprünglich nur dem Sicherheitsprozessor bekannt ist und der Lizenzschlüssel-Verschlüsselungsschlüssel ursprünglich dem Empfänger bekannt ist, wobei die Kopfstelle des Netzes:
- zeitlich nacheinander eine erste und eine zweite Verschlüsselung (in 210, 212) des Lizenzschlüssels (K_{Term}) durchführt, um ein Kryptogramm des Lizenzschlüssels (K_{Term}) zu erhalten, wobei die erste und die zweite Verschlüsselung mithilfe unterschiedlicher Verschlüsselungsschlüssel, ausgewählt aus der Gruppe bestehend aus Prozessorschlüssel (K_{ProcU}) und Lizenzschlüssel-Verschlüsselungsschlüssel (K_{li-cence}), durchgeführt werden, und
- dieses zweite Kryptogramm des Lizenzschlüssels in die Nachricht der Lizenzübertragung einbettet.

5. Verfahren zum Empfangen eines verwürfelten Multimediaprogramms, das mit einem Verfahren zum Senden nach einem beliebigen der vorhergehenden Ansprüche versendet wird, bei dem das Endgerät:
- die Sende-Multicast-Adresse hört (in 120; 270) und den multiplexierten Inhalt empfängt,
- den empfangenen multiplexierten Inhalt demultiplexiert (in 122; 272), um das zweite Kryptogramm und das verwürfelte Multimediaprogramm zu erhalten,
- das zweite Kryptogramm entschlüsselt (in 130; 274), um das erste Kryptogramm zu erhalten,
- das erste Kryptogramm entschlüsselt (in 134; 284), um das Steuerwort zu erhalten, wobei die erste und die zweite Entschlüsselung mithilfe von unterschiedlichen Verschlüsselungsschlüsseln, ausgewählt aus der Gruppe bestehend aus dem Nutzungsschlüssel (K_{Proc}) und dem Lizenzschlüssel (K_{Term}), durchgeführt werden,
und
- das verwürfelte Multimediaprogramm mit dem Steuerwort entwürfelt (in 136; 288), **dadurch gekennzeichnet, dass** bei dem Authentifizierungsschritt das Endgerät mit der Kopfstelle des Netzes zusammenarbeitet, um sich zu authentifizieren,
wobei das Endgerät auch einen Authentifizierungsschritt der Kopfstelle des Netzes durchführt und wenn die Kopfstelle des Netzes mit Erfolg authentifiziert wurde, das Endgerät den Lizenzschlüssel aus der Nachricht der Lizenzübertragung erhält (in 232),
wohingegen, wenn die Kopfstelle des Netzes nicht mit Erfolg authentifiziert wurde, die Entwürfelung des Multimediaprogramms von diesem Endgerät verhindert wird (in 200),
und wobei für ein Endgerät, das geeignet ist, Kryptogramme mithilfe eines vorbestimmten einzigartigen Schlüssel (K_{ECMU}) zu verschlüsseln oder zu entschlüsseln, dieser einzigartige Schlüssel (K_{ECMU}) dieses Endgerät in einzigartiger Weise aus der Gesamtheit der mit dem Netz verbundenen Endgeräte identifiziert,
bei dem Authentifizierungsschritt der Kopfstelle des Netzes das Endgerät überprüft (in 178), dass die Kopfstelle des Netzes geeignet ist, Daten korrekt mit dem von der Kopfstelle des Netzes bestimmten einzigartigen Schlüssel (K_{ECMU}) zu verschlüsseln oder zu entschlüsseln, aus:
- der Kopfstelle des Netzes bekannten vorgespeicherten Daten und die ihr nicht von dem Endgerät übertragen wurden und
- von dem Endgerät an die Kopfstelle des Netzes übertragenen Daten (UA), wobei die vorgespeicherten Daten und die übertragenen Daten jeweils allein nicht ausreichend sind, die Bestimmung des einzigartigen Schlüssels (K_{ECMU}) dieses Endgerätes zu ermöglichen.

6. Verfahren nach Anspruch 5 zum Empfangenen eines gemäß einem Verfahren nach Anspruch 2 gesendeten Multimediaprogramms, bei dem bei der Phase des Erstellens des gesicherten Tunnels:
a) wenn das Endgerät mit Erfolg authentifiziert wurde, dieses Endgerät mit der Kopfstelle des Netzes zusammenarbeitet, um den gemeinsamen Sitzungsschlüssel (Kₛ) zu erstellen und die mithilfe des gemeinsamen Sitzungsschlüssels empfangene Nachricht der Lizenzübertragung entschlüsselt (in 220) und
b) wenn das Endgerät nicht mit Erfolg authentifiziert wurde, das Entwürfeln des Multimediaprogramms durch dieses Endgerät verhindert wird (in 200).

7. Verfahren zum Empfangen eines gesendeten Multimediaprogramms mithilfe eines Sendeverfahrens entsprechend Anspruch 3 und mithilfe eines Endgerätes, das mit einem einen Prozessorschlüssel (K_{ProcU}) enthaltenden Sicherheitsprozessor ausgerüstet ist, bei dem der Sicherheitsprozessor das Kryptogramm des Lizenzschlüssels (K_{Term}) mithilfe des Prozessorschlüssels (K_{ProcU}) entschlüsselt (in 228).

8. Verfahren nach einem beliebigen der Ansprüche 5 bis 7 für ein mit einem Empfänger, der einen Lizenzschlüssel-Verschlüsselungsschlüssel (K_{licence}) enthält, und einem entfernbaren Sicherheitsprozessor, der einen Sicherheitsprozessorschlüssel (K_{ProcU}) enthält, ausgerüsteten Endgerät, wobei der Prozessorschlüssel ursprünglich nur dem Sicherheitsprozessor bekannt ist und der Lizenzschlüssel-Verschlüsselungsschlüssel ursprünglich dem Empfänger bekannt ist, wobei der Sicherheitsprozessor und der Empfänger nacheinander eine erste und eine zweite Entschlüsselung (in 228, 232) eines Kryptogramm des Lizenzschlüssels (K_{Term}) durchführen, wobei die erste und die zweite Entschlüsselung mithilfe eines ersten und eines zweiten unterschiedlichen Entschlüsselungsschlüssels, ausgewählt aus der Gruppe bestehend aus Prozessorschlüssel (K_{ProcU}) und Lizenzschlüssel-Verschlüsselungsschlüssel (K_{licence}), durchgeführt werden.

9. Kopfstelle (4) eines Netzes, **dadurch gekennzeichnet, dass** diese Kopfstelle des Netzes geeignet ist, ein Verfahren zum Senden von verwürfelten Multimediaprogrammen entsprechend einem beliebigen der Ansprüche 1 bis 4 durchzuführen.

10. Endgerät (8) zum Empfangen von verwürfelten Multimediaprogrammen, **dadurch gekennzeichnet, dass** dieses Endgerät geeignet ist, ein Verfahren zum Empfangen entsprechend einem beliebigen der Ansprüche 5 bis 8 durchzuführen.

11. Empfänger (40) für verwürfelte Multimediaprogramme, **dadurch gekennzeichnet, dass** er geeignet ist, einem entfernbaren Sicherheitsprozessor zugeordnet zu werden, um ein Endgerät zum Empfangen nach Anspruch 10 zu bilden.

12. Entfernbarer Sicherheitsprozessor (42), **dadurch gekennzeichnet, dass** er geeignet ist, einem Empfänger für verwürfelte Multimediaprogramme zugeordnet zu werden, um ein Endgerät zum Empfangen nach Anspruch 10 zu bilden.

## Claims

1. Method for broadcasting a scrambled multimedia programme by way of a broadband network, wherein:
- information can be routed to a multicast address so that only one group of several terminals corresponding to this multicast address receives the information while other terminals connected to the same network do not receive this information, and
- information can be routed to a unicast address so that only the terminal corresponding to this unicast address receives the information while the other terminals connected to the same network do not receive it,
and wherein a network head (4):
- scrambles (at 96; 250) the multimedia programme with a control word,
- encrypts (at 98; 252) the control word in order to obtain a first cryptogram,
- encrypts (at 100; 256) the first cryptogram in order to obtain a second cryptogram, the first and second encryptions being effected by means of different encryption keys selected from the group composed of a processing key (K_{Proc}) and a licence key (K_{Term}),
- multiplexes (at 104; 258) the second cryptogram with the scrambled multimedia programme to obtain multiplexed contents,
- broadcasts (at 108; 262) the multiplexed contents to a multicast broadcast address in order to establish a point-to-multipoint connection between the network head and several receivers of the multiplexed contents, and
- on a point-to-point link established (at 150) with a terminal using the unicast address of this terminal, transmits the licence key individually to this terminal by way of this point-to-point link,
**characterized in that** said processing key is common to all terminals of operator, and **in that** before the transmission of the licence key :
- the network head carries out a step of authenticating the terminal wherein the network head :
- determines (at 160) a unique key (K_{ECMU}) suitable for identifying the terminal from among all of the terminals connected to the network, on the basis of:
. pre-recorded data which are known to the network head and which have not been transmitted to it by the terminal, and
. data transmitted (UA) by the terminal to the network head, the pre-recorded data and the transmitted data each being insufficient by themselves to permit the determination of the unique key (K_{ECMU}) used by this terminal,
- checks (at 196) that the terminal is capable of correctly encrypting or decrypting data with the unique key which it has determined without the network head having had to transmit to this terminal beforehand the pre-recorded data or the unique key (K_{ECMU}) determined, the checking comprising :
- sending, by the network head (at 168) an ECM message (Entitlement Control Message) to the terminal in which the field which is to contain a cryptogram of a control word contains a cryptogram obtained by encrypting a datum (Alea_{Auth}) unknown to the terminal by means of the unique key (K_{ECMU}) determined,
- then checking (at 196) that the datum unknown to the terminal has been correctly decrypted by this terminal,
and, in the affirmative, establishes (at 198) that the terminal is authenticated , and
- if the terminal has been successfully authenticated, the network head sends (at 216) to the terminal a licence transmission message containing the licence key or a cryptogram of the licence key, by way of the point-to-point link established, and
- if the terminal is not successfully authenticated, the network head acts (at 200) in such a manner as to prevent the complete unscrambling by this terminal of the scrambled multimedia programme broadcast,

2. Method according to claim 1, wherein the network head carries out a phase of establishing a secure tunnel on the point-to-point link established, during which, if the terminal has been successfully authenticated:
- the network head establishes, by random selection, a session key common to the terminal and to the network head, then
- sends to the terminal the licence transmission message encrypted with this session key.

3. Method according to any one of the preceding claims for a terminal equipped with a security processor containing a security processor key (K_{ProcU}), wherein the network head encrypts (at 212) the licence key (K_{Term}) at least by means of the key (K_{ProcU}) of the security processor of the terminal in order to obtain a cryptogram of the licence key (K_{Term}), and incorporates this cryptogram of the licence key (K_{Term}) in the licence transmission message.

4. Method according to any one of the preceding claims for a terminal equipped with a receiver containing a key (K_{licence}) for encrypting the licence key and with a removable security processor containing a security processor key (K_{ProcU}), the processor key initially being known solely to the security processor and the key for encrypting the licence key initially being known to the receiver, wherein the network head:
- carries out consecutively over time a first and second encryption (at 210, 212) of the licence key (K_{Term}) in order to obtain a cryptogram of the licence key (K_{Term}), the first and second encryptions being carried out by means of different encryption keys selected from the group composed of the processor key (K_{ProcU}) and the key (K_{licence}) for encrypting the licence key, and
- incorporates this second cryptogram of the licence key in the licence transmission message.

5. Method for receiving a scrambled multimedia programme broadcast by means of a broadcasting method according to any one of the preceding claims, wherein the terminal:
- monitors (at 120; 270) the multicast broadcast address and receives the multiplexed contents,
- demultiplexes (at 122 ; 272) the multiplexed contents received in order to obtain the second cryptogram and the scrambled multimedia programme,
- decrypts (at 130 ; 274) the second cryptogram in order to obtain the first cryptogram,
- decrypts (at 134 ; 284) the first cryptogram in order to obtain the control word, the first and second decryptions being effected by means of different encryption keys selected from the group composed of the processing key (K_{Proc}) and the licence key (K_{Term}), and
- unscrambles (at 136 ; 288) the scrambled multimedia programme with the control word,
**characterized in that**, during the authentication step, the terminal cooperates with the network head in order to be authenticated,
wherein the terminal also carries out a step of authenticating the network head and, if the network head has been successfully authenticated, the terminal obtains (at 232) the licence key from the licence transmission message whereas, if the network head has not been successfully authenticated, the terminal is prevented (at 200) from unscrambling the multimedia programme,
and wherein, for a terminal capable of encrypting or decrypting cryptograms by means of a predetermined unique key (KECMU), this unique key (K_{ECMU}) identifying this terminal in a unique manner from among all of the terminals connected to the network, during the step of authenticating the network head, the terminal checks (at 178) that the network head is capable of correctly encrypting or decrypting data with the unique key (K_{ECMU}) determined by the network head on the basis of:
- pre-recorded data which are known to the network head and which have not been transmitted to it by the terminal, and
- data (UA) transmitted by the terminal to the network head, the pre-recorded data and the transmitted data each being insufficient by themselves to permit the determination of the unique key (K_{ECMU}) of this terminal.

6. Method according to claim 5, for receiving a multimedia programme broadcast in accordance with a method according to claim 2, wherein, during the phase of establishing the secure tunnel:
a) if the terminal has been successfully authenticated, the terminal cooperates with the network head to establish the common session key (Kₛ) and decrypts (at 220) the licence transmission message received by means of the common session key, and
b) if the terminal is not successfully authenticated, the terminal is prevented (at 200) from unscrambling the multimedia programme.

7. Method for receiving multimedia programmes broadcast by means of a broadcasting method according to claim 3, and by means of a terminal equipped with a security processor containing a processor key (K_{ProcU}), wherein the security processor decrypts (at 228) the cryptogram of the licence key (K_{Term}) by means of the processor key (K_{ProcU}).

8. Method according to any one of claims 5 to 7 for a terminal equipped with a receiver containing a key (K_{licence}) for encrypting the licence key and with a removable security processor containing a processor key (K_{ProcU}), the processor key initially being known solely to the security processor and the key for encrypting the licence key initially being known to the receiver, wherein the security processor and the receiver carry out consecutively a first and second decryption (at 228, 232) of a cryptogram of the licence key (K_{Term}), the first and second decryptions being carried out by means of a different first and second decryption key, respectively, selected from the group composed of the processor key (K_{ProcU}) and the key (K_{licence}) for encrypting the licence key.

9. Network head (4), **characterized in that** this network head is capable of implementing a method for broadcasting scrambled multimedia programmes according to any one of claims 1 to 4.

10. Terminal (8) for receiving scrambled multimedia programmes, **characterized in that** this terminal is capable of implementing a receiving method according to any one of claims 5 to 8.

11. Receiver (40) of scrambled multimedia programmes, **characterized in that** it is capable of being associated with a removable security processor in order to form a receiving terminal according to claim 10.

12. Removable security processor (42), **characterized in that** it is capable of being associated with a receiver of scrambled multimedia programmes in order to form a receiving terminal according to claim 10.
